# EUROPEAN PATENT APPLICATION

(11) **EP 4 549 861 A1**
(43) Date of publication of application: **07.05.2025**
(21) Application number: 24209350.8
(22) Date of filing: 29.10.2024
(51) Int. Cl.: F26B 13/10, F26B 21/00, H01M 4/04

(54) **GAS INJECTION NOZZLE FOR DRYING ELECTRODE PLATE AND DRYING APPARATUS FOR ELECTRODE PLATE INCLUDING THE SAME**

(30) Priority: 02.11.2023 KR 20230150267
(71) Applicant: SK Innovation Co., Ltd., Seoul 03188 (KR); SK On Co., Ltd., Seoul 03161 (KR)
(72) Inventor: LEE, Jun Young, 34124 Daejeon (KR); KIM, Ju Hyun, 34124 Daejeon (KR)
(74) Representative: Prüfer & Partner mbB Patentanwälte · Rechtsanwälte

(57) **Abstract**

The present disclosure relates to a gas injection nozzle (100) for drying an electrode plate, coupled to a chamber of a drying apparatus (200) for the electrode plate, and including: a first nozzle body (110) including at least one inlet opening (115, 115a) configured to allow the drying gas to flow therein; a second nozzle body (120) connected to the first nozzle body (110) and including a plurality of injection holes (125) configured to inject the drying gas outside of the gas injection nozzle (100); and a partition plate (130) disposed between the first nozzle body (110) and the second nozzle body (120), and including at least one communication hole (135) configured to allow the drying gas to flow from the at least one inlet opening (115, 115a) to the plurality of injection holes (125). At least a portion of the first nozzle body (110) has a shape protruding into a gas supply space of the chamber so as to be disposed inside the chamber (210, 230).

## Description

### TECHNICAL FIELD

The disclosure and implementations disclosed in this patent document generally relate to a gas injection nozzle used to dry an electrode plate and a drying apparatus for the electrode plate including the same. The gas injection nozzle for drying an electrode plate and the drying apparatus for the electrode plate including the same of the present disclosure may be widely applied in the field of secondary battery technology, such as pouch-type secondary batteries and square-shaped secondary batteries.

### BACKGROUND

A secondary battery cell is capable of being charged and discharged unlike primary batteries, and may be applied to devices within various technical fields such as a digital camera, a mobile phone, a laptop computer, a hybrid vehicle, an electric vehicle, an energy storage device, and the like.

A secondary battery may be classified as a pouch-type secondary battery or a can-type secondary battery, and has a structure in which an electrode assembly and an electrolyte are accommodated inside a case. The electrode assembly has a structure in which electrode plates and separators are alternately stacked. The electrode plate may include a cathode plate and an anode plate. Generally, the electrode plate includes a sheet or film-shaped current collector, and a cathode active material and an anode active material applied to the current collector. For example, the anode plate may be formed by applying the anode active material to a copper sheet, and the cathode plate may be formed by applying a cathode active material to an aluminum sheet. An electrode plate is manufactured through a coating process of coating an active material on the current collector and a drying process of drying the active material. The coating process and the drying process have a significant impact on the quality of secondary batteries.

In the drying process, drying gas such as hot air is injected onto a sheet of the current collector coated with the active material to dry the active material. In the drying process, when a deviation in a flow rate and/or flow velocity of the drying gas varies greatly, depending on the position of the electrode plate, there may be a problem in that the quality of the electrode plate may be not uniform because a degree of drying and drying efficiency vary depending on the position of the electrode plate.

Additionally, when a deviation in the flow rate and/or flow velocity of the drying gas is large, cracks, warping, and the like, may occur in the electrode plate depending on the position of the electrode plate, which may deteriorate the quality of the electrode plate.

### SUMMARY

When a width of an electrode plate is narrow, a distance between a central portion of the electrode plate and both side parts thereof is short, along (based on) a width direction of the electrode plate, and accordingly, a deviation in a flow rate and/or flow velocity between the central portion of the electrode plate and both side parts thereof may not be large. However, when a width of the electrode plate is wide, a large deviation in a flow rate and/or flow velocity may occur between the central portion and both side parts of the electrode plate along (based on) the width direction of the electrode plate. In this case, drying deviation in the width direction of the electrode plate may increase and the quality of the electrode plate may deteriorate.

According to an aspect of the present disclosure, provided is a gas injection nozzle for drying an electrode plate and a drying apparatus for the electrode plate including the same, which may reduce a deviation in a flow rate and/or flow velocity depending on the position of the electrode plate.

According to an aspect of the present disclosure, provided is a gas injection nozzle for drying an electrode plate and a drying apparatus for the electrode plate including the same, which may reduce the variation in drying efficiency and drying quality depending on the position of the electrode plate.

According to an aspect of the present disclosure, provided is a gas injection nozzle for drying an electrode plate and a drying apparatus for the electrode plate including the same, which may improve the quality of electrode plate even for a wide electrode plate.

An electrode plate manufactured by a gas injection nozzle for drying an electrode plate and a drying apparatus for the electrode plate including the same, and a battery cell including the same may be widely applied to devices within green technology fields such as an electric vehicle, a battery charging station, and solar and wind power generation using other batteries. Additionally, the electrode plate manufactured according to the present disclosure and the battery cell including the same may be used in an eco-friendly electric vehicle, a hybrid vehicle, and the like, to prevent a climate change by suppressing air pollution and greenhouse gas emissions.

A gas injection nozzle for drying an electrode plate according to the present disclosure includes: a gas injection nozzle coupled to a chamber of a drying apparatus for the electrode plate, including the chamber for supplying drying gas for drying the electrode plate; a first nozzle body including at least one inlet opening configured to allow the drying gas to flow therein; a second nozzle body connected to the first nozzle body and including a plurality of injection holes configured to inject the drying gas to the outside; and a partition plate disposed between the first nozzle body and the second nozzle body, and including at least one communication hole configured to allow the drying gas to flow from the at least one inlet opening to the plurality of injection holes, and at least a portion of the first nozzle body may have a shape protruding into a gas supply space of the chamber so as to be disposed inside the chamber.

In one embodiment, the second nozzle body may be disposed outside the chamber.

In one embodiment, the first nozzle body may include a first plate in which the at least one inlet opening is formed, and a first sidewall extending from both ends of the first plate.

In one embodiment, the at least one inlet opening may have a slit shape crossing the first plate in a longitudinal direction of the first nozzle body.

In one embodiment, the at least one communication hole may have a slit shape crossing the partition plate in a longitudinal direction of the partition plate.

In one embodiment, the first plate and the partition plate may be spaced apart from each other in a first direction, and the at least one communication hole may be disposed not to face the at least one inlet opening along (based on) the first direction.

In one embodiment, the number of the at least one communication hole may be more than the number of the at least one inlet opening.

In one embodiment, the second nozzle body may include a second plate in which the plurality of injection holes are formed, and a second sidewall extending from both ends of the second plate, and the first nozzle body may include a first sidewall connected to the second sidewall and a cap plate covering the first sidewall.

In one embodiment, the cap plate may include a first part spaced apart from an upper end of the first sidewall, and a second part extending from both ends of the first part, and the at least one inlet opening may be formed between an outer surface of the first sidewall and the second part.

In one embodiment, the cap plate may include a cross-section having an upside-down U-Shape.

In one embodiment, a second gap between the upper end of the first sidewall and the first part may have a value of 0.7 to 1.3 times a first gap between the outer surface of the first sidewall and the second part.

In one embodiment, a height of the second part may have a value of 10% or more and 90% or less of a height of the first sidewall.

In one embodiment, a total cross-sectional area of the at least one communication hole may have a value greater than a value of a total cross-sectional area of the at least one inlet opening.

In one embodiment, the partition plate may divide a flow space formed between the first nozzle body and the second nozzle body into a first flow space opposing the first nozzle body and a second flow space opposing the second nozzle body.

In one embodiment, the second nozzle body may include a coupling portion coupled to the chamber through a fastening member, and the first nozzle body may have a shape protruding from the coupling portion toward the gas supply space of the chamber.

In one embodiment, the plurality of injection holes may have a circular shape.

A drying apparatus for an electrode plate according to the present disclosure may include: a chamber having a gas supply space through which drying gas for drying the electrode plate flows; and a plurality of gas injection nozzles coupled to the chamber to communicate with the gas supply space of the chamber, and the plurality of gas injection nozzles includes: a first nozzle body including at least one inlet opening configured to allow drying gas of the gas supply space to flow therein; a second nozzle body connected to the first nozzle body and including a plurality of injection holes configured to inject the drying gas onto the electrode plate; and a partition plate disposed between the first nozzle body and the second nozzle body and including at least one communication hole configured to allow the drying gas to flow from the at least one inlet opening to the plurality of injection holes, and at least a portion of the first nozzle body may have a shape protruding into the gas supply space so as to be disposed in the gas supply space of the chamber.

In one embodiment, the second nozzle body may include a coupling portion coupled to the chamber through a fastening member, and the first nozzle body may have a shape protruding from the coupling portion toward the gas supply space of the chamber.

In one embodiment, the chamber may include an inlet port for supplying the drying gas from the outside of the chamber to the gas supply space, and the inlet port may be configured to supply the drying gas in a longitudinal direction of the gas injection nozzle.

In one embodiment, the chamber may include a first chamber through which the drying gas injected onto a first surface of the electrode plate flows, and a second chamber through which the drying gas injected onto a second surface of the electrode plate flows, and a plurality of gas injection nozzles may be installed in at least one of the first chamber or the second chamber.

A system for drying an electrode, in particular for drying a cathode and/or an anode of a battery, comprises such an electrode and the gas injection nozzle as defined above, or the drying apparatus as defined above.

A method for preparing a dried electrode plate, in particular for preparing a dried cathode and/or a dried anode of a battery, comprises providing an electrode plate to be dried, and using the gas injection nozzle as defined above, or the drying apparatus as defined above to let drying gas flow for drying the electrode plate.

According to one embodiment of the present disclosure, it may be possible to reduce a deviation in a flow rate and/or flow velocity depending on a position of an electrode plate.

According to one embodiment of the present disclosure, it may be possible to reduce a variation in drying efficiency and drying quality depending on a position of an electrode plate.

According to one embodiment of the present disclosure, an occurrence of defects such as cracks and bending on both side parts of an electrode plate, even for wide electrode plates, may be reduced, and the quality of the electrode plate may be improved even for wide electrode plates.

### BRIEF DESCRIPTION OF DRAWINGS

Certain aspects, features, and advantages of the present disclosure are illustrated by the following detailed description with reference to the accompanying drawings.
FIG. 1 is a perspective view illustrating a drying apparatus for an electrode plate according to one embodiment.
FIG. 2A is a perspective partially cut-away view illustrating a gas injection nozzle for drying an electrode plate according to one embodiment.
FIG. 2B is a cross-sectional view of the gas injection nozzle illustrated in FIG. 2A.
FIG. 2C is a schematic diagram illustrating flow of drying gas in the gas injection nozzle illustrated in FIG. 2B.
FIG. 2D is a view illustrating a result of simulating the flow of drying gas for the gas injection nozzle illustrated in FIG. 2C.
FIG. 3A is a perspective partially cut-away view illustrating a gas injection nozzle for drying an electrode plate according to another embodiment.
FIG. 3B is a cross-sectional view of the gas injection nozzle illustrated in FIG. 3A.
FIG. 3C is a schematic diagram illustrating the flow of drying gas in the gas injection nozzle illustrated in FIG. 3B.
FIG. 3D is a view illustrating a result of simulating the flow of drying gas for the gas injection nozzle illustrated in FIG. 3C.
FIG. 4 is a perspective view illustrating a drying apparatus for an electrode plate according to a comparative example.
FIG. 5 is a perspective partially cut-away view illustrating a gas injection nozzle for drying an electrode plate according to a first comparative example.
FIG. 6 is a cross-sectional view illustrating a gas injection nozzle for drying an electrode plate according to a second comparative example.
FIG. 7A is a view illustrating a result of simulating the flow of drying gas according to the first comparative example illustrated in FIG. 5.
FIG. 7B is a view illustrating a result of simulating the flow of drying gas according to the second comparative example illustrated in FIG. 6.
FIG. 7C is a view illustrating a result of simulating the flow of drying gas according to a first inventive example illustrated in FIGS. 2A to 2D.
FIG. 7D is a view illustrating a result of simulating the flow of drying gas according to a second inventive example of FIGS. 3A to 3D.
FIG. 8 is a graph obtained by comparing differences in an average velocity according to a width directional position of the electrode plate for Inventive Examples and Comparative Examples of the present disclosure.

### DETAILED DESCRIPTION

Hereinafter, the singular also includes the plural unless specifically stated otherwise in the phrase. It will be further understood that the terms "comprises," "comprising," "includes" and/or "including", when used herein, specify the presence of stated features, integers, steps, operations, elements, components and/or combinations thereof, but do not preclude the presence or addition of one or more other features, integers, steps, operations, elements, components, and/or groups thereof.

In addition, it should be noted in advance that the expressions such as "above," "upper," "below", "beneath," "lower," "side," "front," and "rear" are based on the direction illustrated in the drawings, and may be expressed differently if the direction of the object is changed.

In addition, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, the present disclosure will be described in detail with reference to the attached drawings. However, this is merely illustrative and the present disclosure is not limited to the specific embodiments described by way of example.

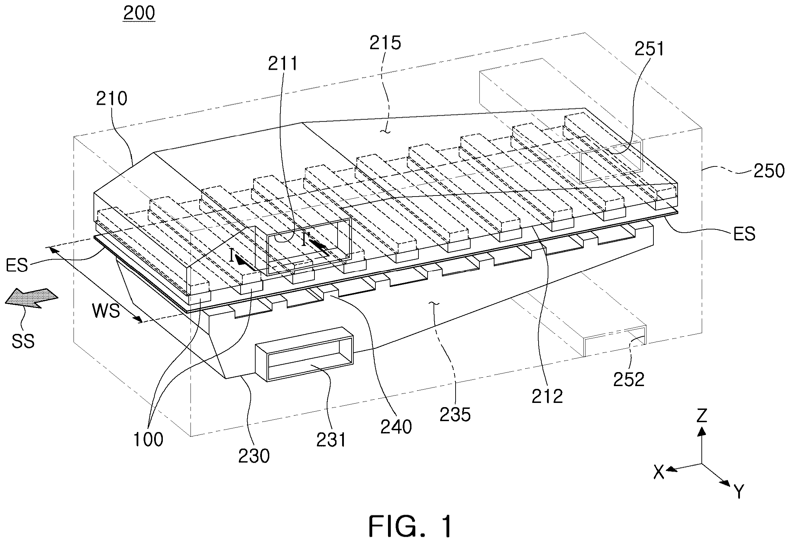

FIG. 1 is a perspective view illustrating a drying apparatus for an electrode plate according to one embodiment.

Referring to FIG. 1, a drying apparatus 200 for an electrode plate according to one embodiment of the present disclosure may include a chamber through which drying gas flows, and a plurality of gas injection nozzles coupled to the chamber. The chamber may include a first chamber 210 and a second chamber 230, and the gas injection nozzle may include a first injection nozzle 100 and a second injection nozzle 240.

An electrode plate ES may include a cathode plate and an anode plate. The electrode plate ES may include a sheet or film-shaped current collector, and a cathode active material or an anode active material applied to the current collector. For example, the anode plate may be formed by applying the anode active material to a copper sheet, and the cathode plate may be formed by applying the cathode active material to an aluminum sheet. The electrode plate ES may be manufactured through a coating process of coating the active material on a current collector followed by a drying process of drying the active material. The drying apparatus 200 for an electrode plate according to one embodiment of the present disclosure may be applied to the drying process of the electrode plate ES. The drying apparatus for an electrode plate 200 according to one embodiment may be applied to the drying process of the anode plate, but may also be applicable to the drying process of the cathode plate.

A gas supply space in which a drying gas for drying the electrode plate ES flows may be formed in the chamber. The gas supply space may include a first gas supply space 215 formed in the first chamber 210 and a second gas supply space 235 formed in the second chamber 230.

The drying gas may include hot air having a predetermined temperature. The temperature, composition, and physical properties of the drying gas may be variously changed. The first chamber 210 and the second chamber 230 may be disposed on both surfaces of the electrode plate ES to be dried. For example, the first chamber 210 may be configured to allow drying gas injected to a first surface of the electrode plate ES to flow, and the second chamber 230 may be configured to allow drying gas injected to a second surface of the electrode plate ES to flow. The first surface and the second surface of the electrode plate ES may correspond to opposite surfaces of the electrode plate ES, respectively. The first surface and the second surface of the electrode plate ES may correspond to an upper and a lower surface of the electrode plate ES, respectively. In an embodiment, the upper and lower surface of the electrode plate ES may also be referred to as a top and bottom surface of the electrode plate ES, respectively. The first chamber 210 and the second chamber 230 may be spaced apart from each other by a predetermined interval, and the electrode plate ES may move between the first chamber 210 and the second chamber 230 in a transport direction SS. In an embodiment, the electrode plate ES may be positioned between the first chamber 210 and the second chamber 230 in the transport direction SS. The transfer direction SS of the electrode plate ES may correspond to a third direction (X-direction).

Each of the first chamber 210 and the second chamber 230 may include an inlet port for supplying the drying gas to the gas supply space from the outside of the chamber. For example, the first chamber 210 may include a first inlet port 211 configured to supply the drying gas to the first gas supply space 215 from the outside of the first chamber 210. The second chamber 230 may include a second inlet port 231 configured to supply the drying gas to the second gas supply space 235 from the outside of the second chamber 230. Each of the first inlet port 211 and the second inlet port 231 may be disposed on one side of the first chamber 210 and one side of the second chamber 230, respectively, and may be configured to supply the drying gas in a longitudinal direction (or second direction) (Y-direction) of the gas injection nozzle 100. A supply direction of the drying gas may correspond to a direction, perpendicular to the transport direction SS of the electrode plate ES, that is, a width direction of the electrode plate ES.

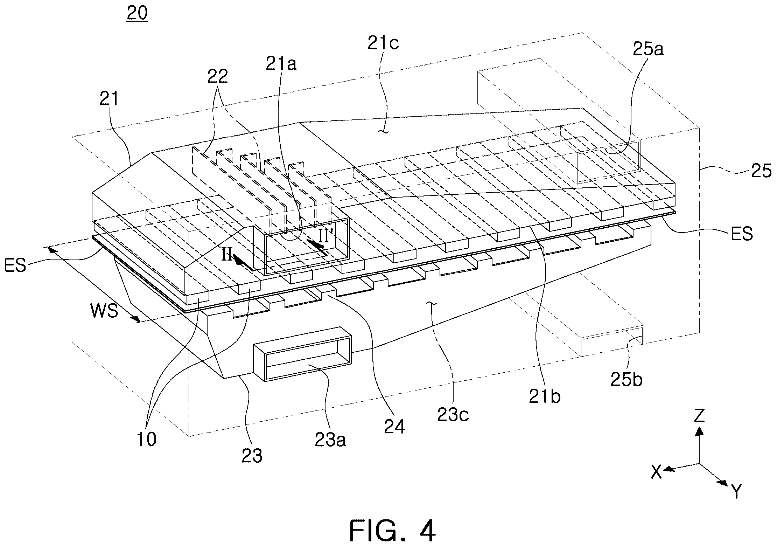

The first chamber 210 and the second chamber 230 may be disposed in a main chamber 250. The main chamber 250 may include an exhaust port for discharging the drying gas injected onto the electrode plate ES through the gas injection nozzle 100 to the outside of the main chamber 250. The exhaust port may include a first exhaust port 251 disposed at the first chamber 210 and a second exhaust port 252 disposed at the second chamber 230. Guide vanes may be disposed in the first exhaust port 251 and the second exhaust port 252 to guide and stabilize a gas flow. For example, the guide vanes installed in the first exhaust port 251 and the second exhaust port 252 may include a shape divided into a plurality of zones, like a guide vane 22 illustrated in FIG. 4.

The plurality of gas injection nozzles may be coupled to the first chamber 210 and/or the second chamber 230 so as to communicate with the first gas supply space 215 of the first chamber 210 and/or the second gas supply space 235 of the second chamber 230. The gas injection nozzle may include a plurality of first injection nozzles 100 disposed in the first chamber 210 and a plurality of second injection nozzles 240 disposed in the second chamber 230. The first injection nozzle 100 and the second injection nozzle 240 may be disposed in positions corresponding to each other to inject the drying gas from an upper side and a lower side of the electrode plate ES, and may have the same number. However, the arrangement position and the number of the first injection nozzle 100 and the second injection nozzle 240 are not limited thereto.

The first injection nozzle 100 may be installed on a base plate 212 of the first chamber 210. The base plate 212 may be configured as a surface of the first chamber 210 opposing the electrode plate ES. The second injection nozzle 240 may also be installed on a surface of the second chamber 230 opposing the electrode plate ES.

The first injection nozzle 100 and the second injection nozzle 240 may have a shape extending in a width direction of the electrode plate ES, which is a direction perpendicular to the transport direction SS (i.e., the third direction) of the electrode plate ES. That is, a longitudinal direction (Y-direction) of the first injection nozzle 100 and the second injection nozzle 240 may correspond to the width direction of the electrode plate ES. The plurality of first injection nozzles 100 and the plurality of second injection nozzles 240 may be spaced apart from each other in the third direction (X-direction), which is the transport direction SS of the electrode plate ES.

When a width of the electrode plate ES is wide, a length of the first injection nozzle 100 and a length of the second injection nozzle 240 also become longer. When the length of the first injection nozzle 100 and the length of the second injection nozzle 240 increase, in the longitudinal direction (second direction) (Y-direction) of the injection nozzle, a deviation in a flow rate and/or flow velocity between a central portion and both side parts, or a deviation in a flow rate and/or flow velocity between both side parts may increase. In this case, a drying deviation may increase depending on a width directional position of the electrode plate ES, and the quality of the electrode plate ES may deteriorate. The drying apparatus 200 for an electrode plate of the present disclosure may reduce the deviation in the flow rate and/or flow velocity by improving the gas injection nozzle 100, thereby improving the quality of the electrode plate ES not only when a width WS of the electrode plate ES is narrow, but also when the width WS of the electrode plate ES is wide. The drying apparatus 200 for an electrode plate of the present disclosure may be applied to an electrode plate ES having a wide width, such as an electrode plate ES having the width WS of 700 mm or more, 1000 mm or more, 1200 mm or more, or 1500 mm or more. However, the width WS of the electrode plate ES applied to the drying apparatus 200 for an electrode plate of the present disclosure may have a value of 700 mm or less.

The first inlet port 211 and the second inlet port 231 may be configured to supply the drying gas in the second direction (Y-direction), which is the longitudinal direction of the gas injection nozzle 100. After the drying gas flows into the first chamber 210 and the second chamber 230 in the second direction (Y-direction) and then flows and disperses in the first gas supply space 215 and the second gas supply space 235, the drying gas may flow into the gas injection nozzle 100 and may be injected in a first direction (Z-direction). That is, the first direction (Z-direction), which is an injection direction of the drying gas injected through the gas injection nozzle 100, may be different from the second direction (Y-direction) in which the drying gas flows into the first chamber 210 and the second chamber 230. Accordingly, according to one embodiment of the present disclosure, it may be possible to reduce the influence of the pressure and/or flow velocity of gas flowing into the first chamber 210 and the second chamber 230 on the flow rate and/or flow velocity of gas injected through the gas injection nozzle 100. That is, since the drying gas is injected through the gas injection nozzle 100 after changing a direction thereof, it may be possible to reduce the deviation in the flow rate and/or flow velocity depending on the width directional (Y-direction) position of the electrode plate ES.

The first injection nozzle 100 and the second injection nozzle 240 may have different configurations. The first injection nozzle 100 and the second injection nozzle 240 may have the same configuration. For example, the first injection nozzle 100 may have a shape including a circular perforated hole (corresponding to an injection hole 125 described below), and the second injection nozzle 240 may have a shape including a Coanda nozzle, i.e., a nozzle having a shape that takes advantage of the Coanda effect. Alternatively, both the first injection nozzle 100 and the second injection nozzle 240 may have a shape including a circular perforated hole.

A plurality of gas injection nozzles of the present disclosure may be installed in at least one of the first chamber 210 or the second chamber 230. However, for convenience of explanation in the present disclosure below, a case in which a gas injection nozzle is the first injection nozzle 100 installed in the first chamber 210 will be described, but the gas injection nozzle of the present disclosure may also be applied to the second injection nozzle 240 installed in the second chamber 230. Hereinafter, reference numeral '100' of the first injection nozzle 100 will be used for the gas injection nozzle.

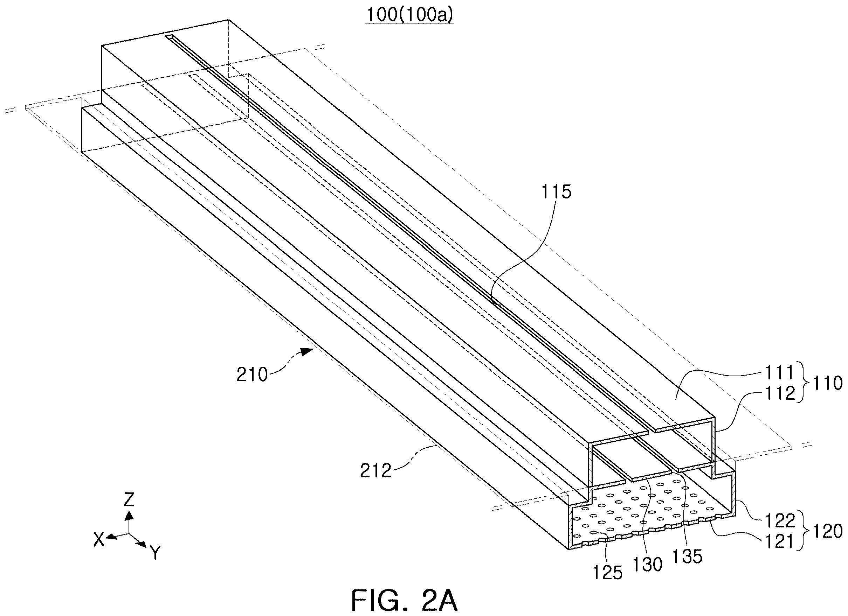

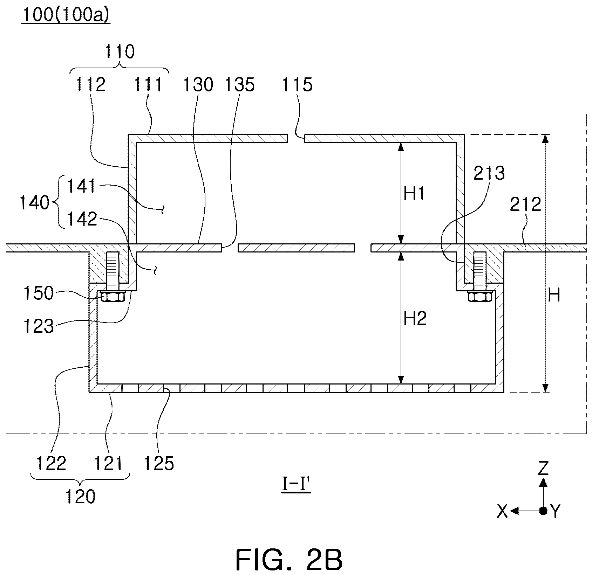

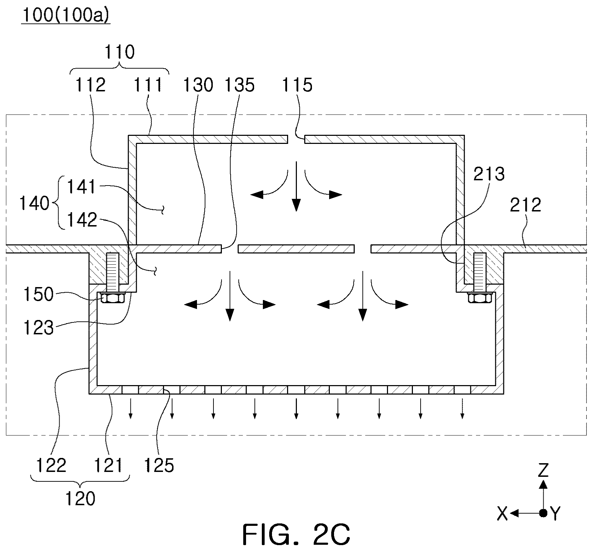

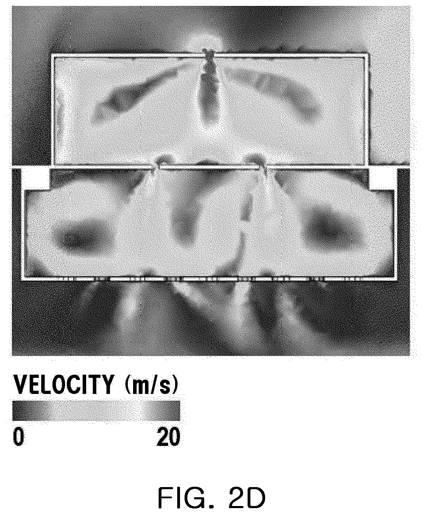

FIG. 2A is a perspective partially cut-away view illustrating a gas injection nozzle 100 for drying an electrode plate ES according to one embodiment, FIG. 2B is a cross-sectional view of the gas injection nozzle 100 illustrated in FIG. 2A, FIG. 2C is a schematic diagram illustrating flow of drying gas in the gas injection nozzle 100 illustrated in FIG. 2B, and FIG. 2D is a view illustrating a result of simulating the flow of drying gas for the gas injection nozzle 100 illustrated in FIG. 2C. FIG. 2D illustrates a flow rate of drying gas on a cross-section, perpendicular to the second direction (Y-direction)

Referring to FIGS. 2A to 2D together with FIG. 1, a gas injection nozzle 100 or 100a according to one embodiment may be coupled to a chamber (e.g., a first chamber 210) configured to supply the drying gas for drying the electrode plate ES. In the following description, the chamber will be described using the first chamber 210 as an example. However, when the gas injection nozzle 100 according to one embodiment is applied to a second injection nozzle, 'chamber' may refer to a second chamber 230.

The gas injection nozzle 100 according to one embodiment may include a first nozzle body 110, a second nozzle body 120, and a partition plate 130. In an embodiment, the partition plate 130 may form a boundary between the first and second nozzle bodies 110 and 120.

The first nozzle body 110 may include at least one inlet opening 115 configured to allow drying gas to flow therein. The first nozzle body 110 may include a first plate 111 having at least one inlet opening 115 formed therein, and a first sidewall 112 extending from both ends of the first plate 111.

The first plate 111 may have a flat shape. The first plate 111 may have a square plate shape. The at least one inlet opening 115 formed in the first plate 111 may have a slit shape. In an embodiment, the at least one inlet opening 115 formed in the first plate 111 may have a slit shape crossing the first plate 111 in a longitudinal direction (Y-direction) of the first nozzle body 110. FIGS. 2A to 2D illustrate a configuration in which the first plate 111 includes only one inlet opening 115. However, the number of inlet openings 115 in the first plate 111 is not limited thereto. For example, the first plate 111 may include two or more inlet openings 115.

The first sidewall 112 may extend in the first direction (Z-direction) from both ends of the first plate 111 in a third direction (X-direction). Additionally, the first sidewall 112 may also include portions extending in the first direction (Z-direction) from both ends of the first plate 111 in the second direction (Y-direction). That is, the first sidewall 112 may extend in the first direction (Z-direction) from four corners of the first plate 111 to the second nozzle body 120. Meanwhile, a portion of the first sidewall 112 extending from both ends of the first plate 111 in the second direction (Y-direction) may be replaced with an inner surface of a chamber (for example, the first chamber 210) .

The second nozzle body 120 may include a plurality of injection holes 125 connected to the first nozzle body 110 and configured to inject drying gas to the outside. The second nozzle body 120 may include a second plate 121 having a plurality of injection holes 125 formed therein, and a second sidewall 122 extending from both ends of the second plate 121.

The second plate 121 may have a flat shape or a square plate shape. The plurality of injection holes 125 formed in the second plate 121 may be formed of a plurality of perforated holes perforated in the second plate 121. The plurality of injection holes 125 may each have a circular cross-sectional shape. However, the embodiments of the present disclosure are not limited thereto, and the injection holes 125 may have various other shapes such as oval or square. The number and arrangement form of the plurality of injection holes 125 are not limited to what is illustrated in FIGS. 2A to 2C, and various changes thereof are possible.

The second sidewall 122 may extend in the first direction (Z-direction) from both ends in the third direction (X-direction) and both ends in the second direction (Y-direction) of the second plate 121. That is, the second sidewall 122 may extend in the first direction (Z-direction) from four corners of the second plate 121 to the first nozzle body 110, thus forming a space for receiving the drying gas.

In a state in which the first plate 111 and the second plate 121 are coupled to each other, a flow space 140 in which the drying gas introduced from the first chamber 210 flows may be formed between the first nozzle body 110 and the second nozzle body 120.

The partition plate 130 may be disposed between the first nozzle body 110 and the second nozzle body 120. The first plate 111 and the partition plate 130 may be spaced apart from each other in the first direction.Similarly, the partition plate 130 and the second plate 121 may be spaced apart in the first direction. The first plate 111 and the partition plate 130 may be spaced apart from each other by a first height H1, and the partition plate 130 and the second plate 121 may be spaced apart from each other by a second height H2.

The partition plate 130 may divide the flow space 140 formed between the first nozzle body 110 and the second nozzle body 120 into a first flow space 141 opposing the first nozzle body 110 and a second flow space 142 opposing the second nozzle body 120. That is, the partition plate 130 may restrict the flow of the drying gas between the first flow space 141 and the second flow space 142 in a space excluding a communication hole 135 to be described below

The partition plate 130 may include at least one communication hole 135 configured to allow the drying gas to flow from the at least one inlet opening 115 to the plurality of injection holes 125. The drying gas in the first flow space 141 may move to the second flow space 142 through the communication hole 135.

The at least one communication hole 135 may have a slit shape crossing the partition plate 130 in a longitudinal direction (Y-direction) of the partition plate 130.

The at least one communication hole 135 may be arranged not to face at least one inlet opening 115 along (based on) the first direction (Z-direction). That is, the at least one inlet opening 115 and the at least one communication hole 135 may be disposed in different positions in the third direction (X-direction). Accordingly, the drying gas after passing through the inlet opening 115 does not pass directly through the communication hole 135 in the first direction (Z-direction), but flows in a direction, different from the first direction (Z-direction), and then flows through the communication hole 135. Accordingly, the flow of drying gas passing through the communication hole 135 may be dispersed.

The number of at least one communication hole 135 may be more than the number of at least one inlet opening 115. In the case in which each of the communication hole 135 and the inlet opening 115 includes a slit-shaped hole having the same width, when the number of communication holes 135 is more than the number of inlet openings 115, a total cross-sectional area of the communication holes 135 may increase. Accordingly, as illustrated in FIG. 2D, as the drying gas spreads in the second flow space 142 in a state in which flow velocity thereof is lower in the process of passing through the communication hole 135 than in the process of passing through the inlet opening 115, the flow or flow velocity thereof may become uniform.

Additionally, regardless of the number or width of the communication holes 135 and the inlet opening 115, the total cross-sectional area of the at least one communication hole 135 may have a value greater than that of a total cross-sectional area of at least one inlet opening 115. In this case, as illustrated in FIG. 2D, as the drying gas spreads in the second flow space 142 in a state in which flow velocity thereof is lower in the process of passing through the communication hole 135 than in the process of passing through the inlet opening 115, the flow or flow velocity thereof may become uniform.

A total cross-sectional area of the plurality of injection holes 125 may have a value larger than a total cross-sectional area of at least one communication hole 135. Accordingly, as illustrated in FIG. 2D, the drying gas may be injected onto the electrode plate ES at reduced flow velocity while passing through the injection hole 125 and may dry the electrode plate ES.

Additionally, the total cross-sectional area of the at least one communication hole 135 may have a larger value than that of the total cross-sectional area of the at least one inlet opening 115, and the total cross-sectional area of the plurality of injection holes 125 may have a larger value than that of the total cross-sectional area of the at least one communication hole 135. Accordingly, as the drying gas sequentially passes through the communication hole 135 and the injection hole 125, the flow velocity thereof may decrease and the flow thereof may become uniform.

Meanwhile, at least a portion of the first nozzle body 110 may have a shape protruding into the gas supply space (e.g., the first gas supply space 215) to be disposed in the chamber (e.g., the first chamber 210). That is, the at least a portion of the first nozzle body 110 may be inserted into the first gas supply space 215 through the opening 213 formed in the base plate 212.

The second nozzle body 120 may be disposed outside the first chamber 210 and may be coupled to the base plate 212 of the first chamber 210. The second nozzle body 120 may include a coupling portion 123 coupled to the first chamber 210 through a fastening member 150 such as a bolt. The coupling portion 123 may be formed on the second sidewall 122. As an example, the coupling portion 123 may be configured to have a step structure formed on a portion of the second sidewall 122. The first nozzle body 110 may have a shape protruding from the coupling portion 123 to the first gas supply space 215 of the first chamber 210.

The first nozzle body 110 and the second nozzle body 120 may be distinguished by a boundary of the partition plate 130. As an example, when the partition plate 130 is disposed on the same plane as the base plate 212 of the first chamber 210, the first nozzle body 110 may be inserted into the first gas supply space 215 and the second nozzle body 120 may be disposed outside the first chamber 210. However, the arrangement position of the partition plate 130 may be higher or lower than a position of the base plate 212.

A total height H of the gas injection nozzle 100 may include a first height H1 of the first flow space 141 and a second height H2 of the second flow space 142. When the total height H of the gas injection nozzle 100 increases, a total volume of the flow space 140 also increases, and, as a result, the flow and velocity of the drying gas may become more uniform in the flow space 140. According to one embodiment, since at least a portion of the first nozzle body 110 is inserted into the first gas supply space 215 of the first chamber 210, a height of the gas injection nozzle 100 exposed to the outside of the first chamber 210 may be reduced while increasing the total height H of the gas injection nozzle 100. Accordingly, according to an embodiment, the flow and/or flow velocity of the drying gas in the flow space 140 may be sufficiently uniformized while reducing the height of the gas injection nozzle 100 exposed to the outside of the first chamber 210.

As described above, according to an embodiment of the present disclosure, after the flow or the flow velocity of the drying gas is sufficiently uniformized in the first flow space 141 and the second flow space 142 in the gas injection nozzle 100, the drying gas may be injected through the injection hole 125. Accordingly, the drying gas may be injected onto the electrode plate ES with little deviation in the flow rate and/or the flow velocity in the longitudinal direction (Y-direction) of the gas injection nozzle 100, that is, the width direction of the electrode plate ES (see FIG. 2D).

Additionally, according to an embodiment, when the gas injection nozzle 100 is coupled to the first chamber 210, since the first nozzle body 110 is inserted into the first gas supply space 215, the first nozzle body 110 may be used to uniformize the flow or the flow velocity of the drying gas. Accordingly, there is an advantage in that there is no need to install or change a separate structure for flow uniformity in the first gas supply space 215 of the first chamber 210. Additionally, when flow performance needs to be improved, only the gas injection nozzle 100 needs to be replaced, so that maintenance and repair are easily performed.

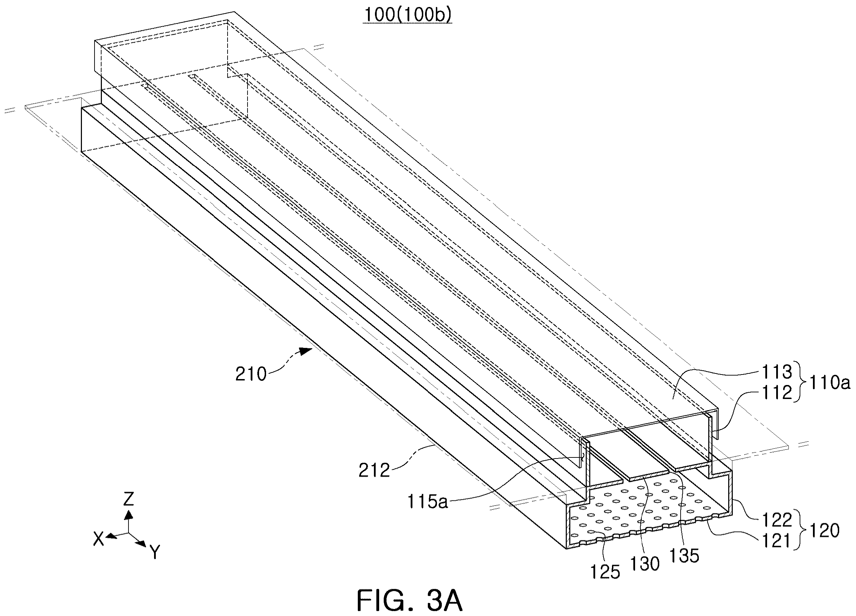

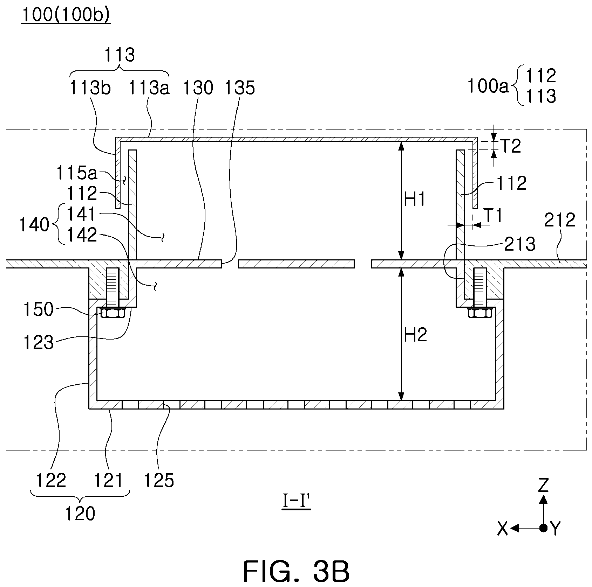

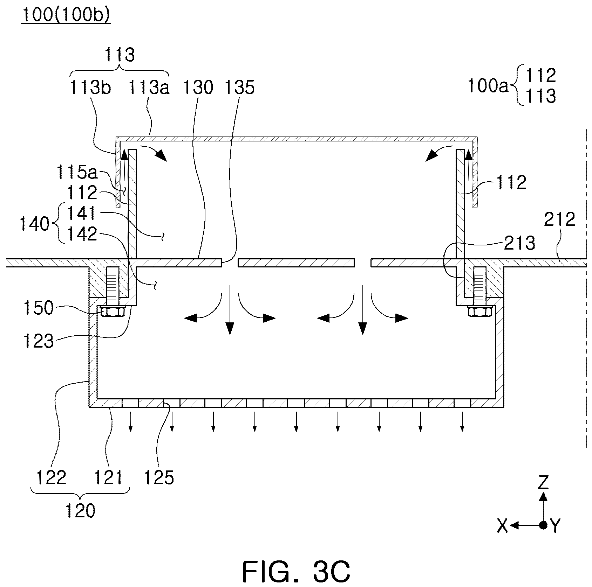

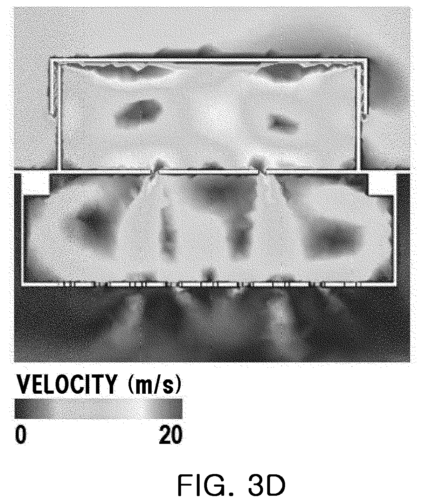

FIG. 3A is a perspective partially cut-away view illustrating a gas injection nozzle 100 for drying an electrode plate ES according to another embodiment, FIG. 3B is a cross-sectional view of the gas injection nozzle 100 illustrated in FIG. 3A, FIG. 3C is a schematic diagram illustrating the flow of drying gas in the gas injection nozzle 100 illustrated in FIG. 3B, and FIG. 3D is a view illustrating a result of simulating the flow of drying gas for the gas injection nozzle 100 illustrated in FIG. 3C. FIG. 3D illustrates the flow velocity of drying gas on a cross-section, perpendicular to a second direction (Y-direction).

A gas injection nozzle 100 or 100b illustrated in FIGS. 3A to 3D may include a first nozzle body 110a, a second nozzle body 120, and a partition plate 130, similarly to the gas injection nozzle 100a illustrated in FIGS. 2A to 2D. The gas injection nozzle 100b illustrated in FIGS. 3A to 3D is different in a partial shape of a first nozzle body 110a from the gas injection nozzle 100a illustrated in FIGS. 2A to 2D. Accordingly, the description of the configuration, identical to or similar to the configuration of the gas injection nozzle 100a, in the configuration of the second nozzle body 120 and the partition plate 130 and the configuration of the first nozzle body 110a will be replaced with the description of FIGS. 2A to 2D, and the description will focus on the different configurations.

The first nozzle body 110a may include at least one inlet opening 115a configured to allow drying gas to flow therein. At least a portion of the first nozzle body 110a may have a shape protruding into a first gas supply space 215 of a first chamber 210 to be disposed in the first chamber 210.

The first nozzle body 110a may include a first sidewall 112 connected to a second sidewall 122 of the second nozzle body 120, and a cap plate 113 covering the first sidewall 112.

The first sidewall 112 may extend in the first direction (Z-direction) from both ends of a partition plate 130. The first sidewall 112 may be connected to the second sidewall 122. The first sidewall 112 may extend in the first direction (Z-direction) from both ends of a partition plate 130 in the third direction (X-direction). Additionally, the first sidewall 112 may also include portions extending in the first direction (Z-direction) from both ends of the partition plate 130 in the second direction (Y-direction).

The cap plate 113 may include a first part 113a disposed apart from an upper end of the first sidewall 112, and a second part 113b extending from both ends of the first part 113a in the third direction (X-direction). The cap plate 113 may include a cross-section having an upside-down U-Shape or rectangular bracket shape. That is, the cap plate 113 may have a cross-sectional shape in which the first part 113a and two second parts 113b extending toward the second sidewall 122 are connected to each other in both ends of the first part 113a. At least one inlet opening 115a in the gas injection nozzle 100b illustrated in FIGS. 3A to 3D may be formed between an outer surface of the first sidewall 112 and the second part 113b.

A first gap T1 between the outer surface of the first sidewall 112 and the second part 113b functions as a space into which drying gas flows from the first gas supply space 215, and a second gap T2 between the upper end of the first sidewall 112 and the first part 113a functions as a space through which the drying gas is discharged into a first flow space 141. That is, the inlet opening 115a may include the first gap T1 and the second gap T2.

A flow direction of the drying gas may be changed while the drying gas passes through the inlet opening 115a and is discharged into the first flow space 141. Accordingly, the drying gas passing through the inlet opening 115a may spread in the first flow space 141 so that the flow or flow velocity thereof becomes uniform or more uniform ("is uniformized"), and may then move to a second flow space 142 through a communication hole 135.

In a process of allowing the drying gas to flow through the first gap T1 and the second gap T2 provided through the inlet opening 115a, the first gap T1 and the second gap T2 may have identical or similar values so that the flow performance such as flow velocity may flow smoothly without significant change. For example, the second gap T2 may have a value of 0.7 to 1.3 times the first gap T1.

A height of the second part 113b may have a value of 10% or more and 90% or less of a height of the first sidewall 112. For example, a height of the second part 113b may have a value of 10% or more, 20% or more, 30% or more, 40% or more, 50% or more, 60% or more, 70% or more, 80% or more, and 90% or more of the height of the first sidewall 112. That is, the second part 113b may have a shape covering 10% or more and 90% or less of an area of the first sidewall 112.

The height of the second part 113b corresponds to a length of the inlet opening 115a. Accordingly, when the height of the inlet opening 115a is insufficient, for example, when the height thereof is less than 10%, the effect of changing a flow direction while discharging the drying gas into the first flow space 141 is reduced. Additionally, when the height of the inlet opening 115a is significantly high, for example, when the height thereof is more than 90%, it may be difficult for the drying gas in the first gas supply space 215 to flow into an inlet side of the inlet opening 115a, which may increase flow resistance.

In an embodiment illustrated in FIGS. 3A to 3D, a total cross-sectional area of at least one communication hole 135 may have a value larger than that of a total cross-sectional area of at least one inlet opening 115a. Accordingly, as illustrated in FIG. 3D, the drying gas may spread into the second flow space 142 in a state in which flow velocity thereof is lower in the process of passing through the communication hole 135 than in the process of passing through the inlet opening 115a, the flow or flow velocity thereof may become uniform. In an embodiment illustrated in FIGS. 3A to 3D, a total cross-sectional area of the inlet opening 115a is defined by a cross-sectional area of an inlet side of the inlet opening 115a.

A total cross-sectional area of a plurality of injection holes 125 may have a value larger than a value of the total cross-sectional area of at least one communication hole 135. Accordingly, as illustrated in FIG. 3D, the drying gas may pass through the injection hole 125 and may be injected onto the electrode plate ES at reduced flow velocity, thereby drying the electrode plate ES.

Additionally, the total cross-sectional area of the at least one communication hole 135 may have a value larger than a value of a total cross-sectional area of the at least one inlet opening 115a, and the total cross-sectional area of the plurality of injection holes 125 may have a value larger than the total cross-sectional area of the at least one communication hole 135. Accordingly, the drying gas may be uniformized while sequentially passing through the communication hole 135 and the injection hole 125 so that the flow velocity thereof may decrease.

As described above, according to an embodiment of the present disclosure, after the drying gas has sufficiently uniform flow velocity in the first flow space 141 and the second flow space 142 in the gas injection nozzle 100, the drying gas may be injected through the injection hole 125. Accordingly, the drying gas may be injected onto the electrode plate ES with little deviation in the flow rate and/or the flow velocity in the longitudinal direction (Y-direction) of the gas injection nozzle 100, that is, the width direction of the electrode plate ES. Accordingly, according to one embodiment, even for a wide electrode plate ES, an occurrence of defects such as cracks and bending on both side parts of the electrode plate ES may be reduced, and even for the wide electrode plate ES, the quality of the electrode plate ES may be improved (see FIG. 3D).

FIG. 4 is a perspective view illustrating a drying apparatus for an electrode plate according to a comparative example.

Referring to FIG. 4, comparing a drying apparatus 20 for an electrode plate according to the comparative example and a drying apparatus 200 for an electrode plate according to an embodiment illustrated in FIG. 1, there is a difference therebetween in an installation of a guide vane 22 in the drying apparatus 20 for an electrode plate and in the configuration of a gas injection nozzle 10 (or a first injection nozzle). Detailed descriptions of identical or similar configurations in both drying apparatuses will be omitted.

The drying apparatus 20 for an electrode plate according to the comparative example accommodates a first chamber 21 and a second chamber 23 in a main chamber 25. An electrode plate ES to be dried may be disposed between the first chamber 21 and the second chamber 23.

The first chamber 21 may have a first inlet 21a through which drying gas flows, and the drying gas introduced through the first inlet 21a may be accommodated in a first gas supply space 21c. The first chamber 21 may have the guide vane 22 installed in a portion of the first gas supply space 21c adjacent to the first inlet 21a. The guide vane 22 may have a shape divided into a plurality of zones in order to disperse the gas introduced into the first inlet 21a.

The second chamber 23 may have a second inlet 23a through which the drying gas flows, and the drying gas introduced through the second inlet 23a may be accommodated in the second gas supply space 23c. The second chamber 23 may also have the guide vane installed in a portion of the second gas supply space 23c adjacent to the second inlet 23a.

The gas injection nozzle may include a first injection nozzle 10 installed in the first chamber 21 and a second injection nozzle 24 installed in the second chamber 23. The first injection nozzle 10 may be coupled to a base plate 21b of the first chamber 21.

The drying gas injected from the gas injection nozzle may be discharged to the outside of the main chamber 25 through a first exhaust port 25a and a second exhaust port 25b after drying the electrode plate ES.

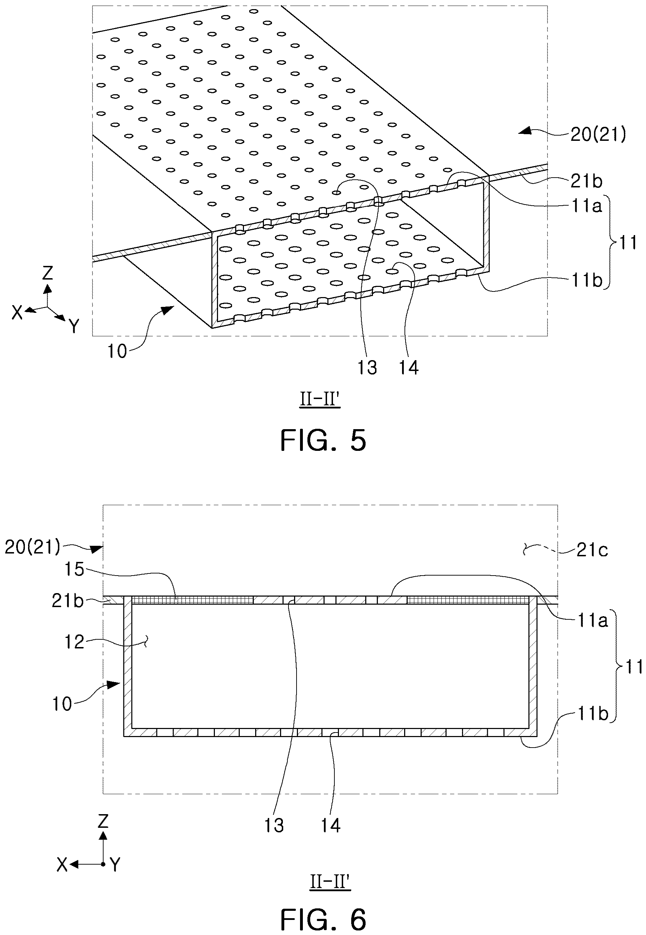

FIG. 5 is a perspective partially cut-away view illustrating a gas injection nozzle for drying an electrode plate according to a first comparative example.

Referring to FIG. 5, a gas injection nozzle 10 for drying an electrode plate according to a first comparative example may include a nozzle body 11 coupled to the base plate 21b of the first chamber 21.

The nozzle body 11 may include a first plate 11a having an inlet opening 13 formed therein and a second plate 11b having an injection hole 14 formed therein. The inlet opening 13 may be formed of a plurality of perforated holes perforated in the first plate 11a. The injection hole 14 may be formed of a plurality of perforated holes perforated in the second plate 11b. The inlet opening 13 and the injection hole 14 may each be formed as circular holes.

FIG. 6 is a cross-sectional view illustrating a gas injection nozzle for drying an electrode plate according to a second comparative example.

A gas injection nozzle 10 for drying an electrode plate according to the second comparative example illustrated in FIG. 6 has a difference from the gas injection nozzle 10 for drying an electrode plate according to the first comparative example illustrated in FIG. 5 in that the gas injection nozzle 10 according to the second comparative example further includes a flow obstruction portion 15.

The flow obstruction portion 15 may have a shape covering portions of the first plate 11a on both sides of the nozzle body 11 in the width direction. The flow obstruction portion 15 may be formed of a mesh member restricting the flow of drying gas.

Hereinafter, embodiments of the present disclosure will be further described with reference to specific experimental examples. Inventive examples and comparative examples included in the experimental examples are merely illustrative of the present disclosure.

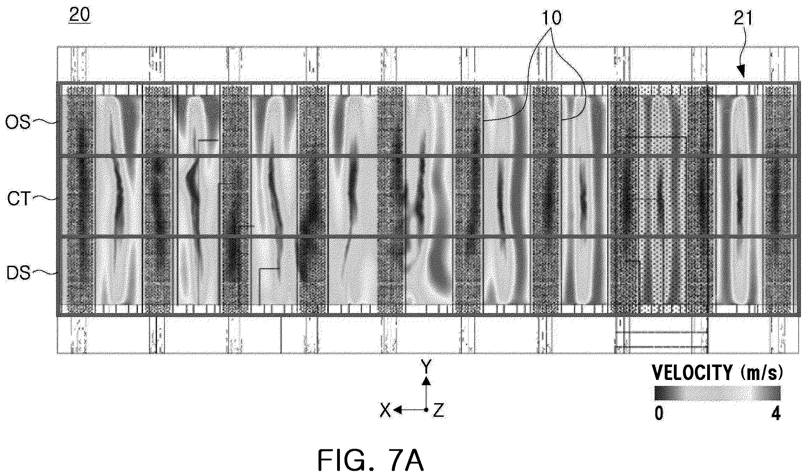

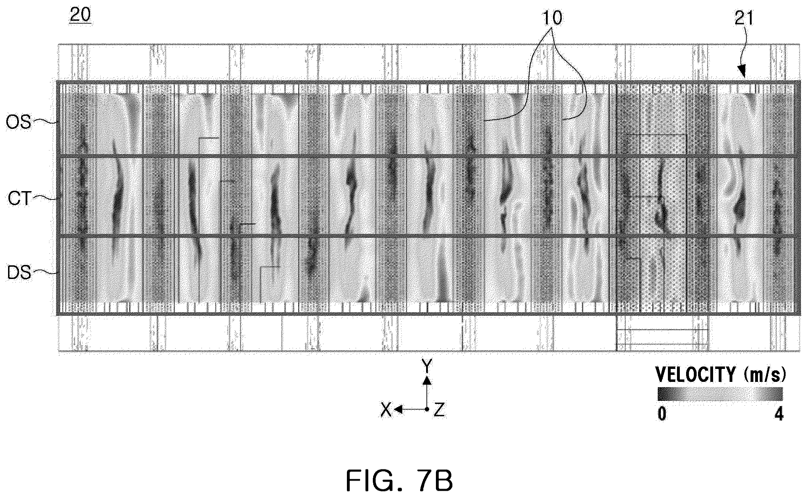

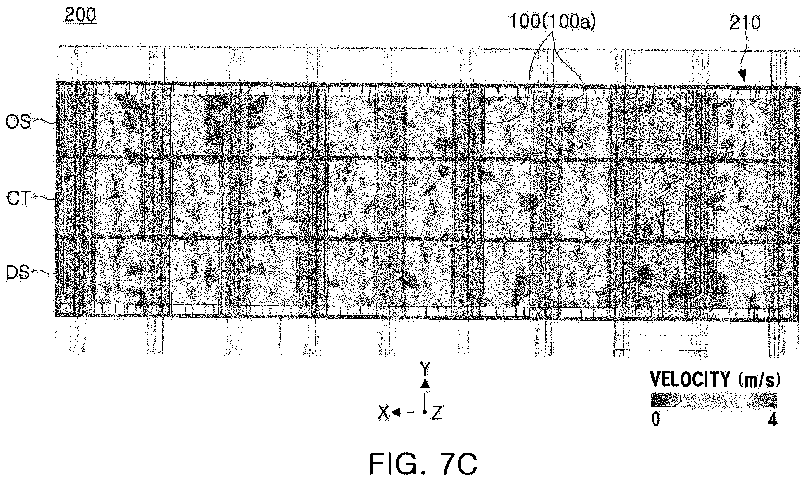

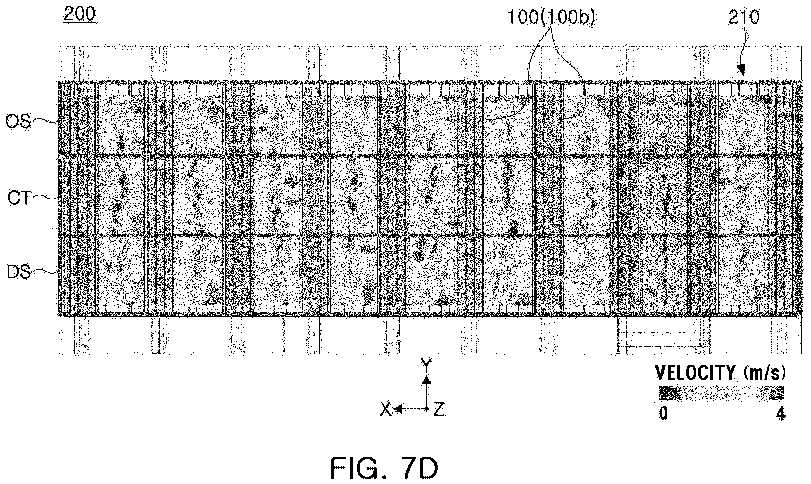

FIG. 7A is a view illustrating a result of simulating the flow of drying gas according to a first comparative example illustrated in FIG. 5, FIG. 7B is a view illustrating a result of simulating the flow of drying gas according to a second comparative example illustrated in FIG. 6, FIG. 7C is a view illustrating a result of simulating the flow of drying gas according to a first inventive example illustrated in FIGS. 2A to 2D, and FIG. 7D is a view illustrating a result of simulating the flow of drying gas according to a second inventive example of FIGS. 3A to 3D

FIGS. 7A to 7D illustrate flow velocity of an upper side 5 mm away from a surface of an electrode plate when drying gas is injected from gas injection nozzles 100 and 10 disposed in first chambers 210 and 21. A region in which the flow velocity of drying gas is measured may be partitioned into a first part DS adjacent to first inlet ports 211 and 21a in the width direction (Y-direction) of an electrode plate, a second part CT disposed in a central portion of the electrode plate in the width direction (Y-direction), and a third part OS disposed away from the first inlet ports 211 and 21a.

FIG. 7A is a simulation result for the first comparative example in which the gas injection nozzle 10 illustrated in FIG. 5 is installed in the first chamber 21 of the drying apparatus 20 for an electrode plate illustrated in FIG. 4. FIG. 7B is a simulation result for the second comparative example in which the gas injection nozzle 10 illustrated in FIG. 6 is installed in the first chamber 21 of the drying apparatus 20 for an electrode plate illustrated in FIG. 4. FIG. 7C is a simulation result for the first inventive example in which the gas injection nozzle 100a illustrated in FIGS. 2A to 2D is installed in the first chamber 210 of the drying apparatus 200 for an electrode plate illustrated in FIG. 1. FIG. 7D is a simulation result for the second inventive example in which the gas injection nozzle 100b illustrated in FIGS. 3A to 3D is installed in the first chamber 210 of the drying apparatus 200 for an electrode plate illustrated in FIG. 1.

The comparative examples of FIGS. 7A and 7B and the inventive examples of FIGS. 7C and 7D were tested under the same conditions except for the structure of the gas injection nozzle and whether or not the guide vane 22 was installed.

In the comparative examples of FIGS. 7A and 7B and the inventive examples of FIGS. 7C and 7D, a cross-sectional area of the first inlet ports 211 and 21a disposed in the first chambers 210 and 21 was 321,000 mm² (square millimeters) and an airflow rate thereof was 119 CMM (cubic meters per minute). The simulation was conducted under room temperature conditions. In the comparative examples of FIGS. 7A and 7B and the inventive examples of FIGS. 7C and 7D, a width WS of an electrode plate was approximately 1,500 mm, and 10 gas injection nozzles 100 and 10 were disposed in the first chambers 210 and 21.

In the case of the gas injection nozzle 10 applied to the first comparative example of FIG. 7A, diameters of each inlet opening 13 were 8 mm and a total cross-sectional area of the plurality of inlet openings 13 was 36, 850 mm² (square millimeter), and diameters of each injection hole 14 was 10 mm and a total cross-sectional area of the plurality of injection holes 14 was 53,780 mm² (square millimeter).

The gas injection nozzle 10 applied to the second comparative example of FIG. 7B is different from the first comparative example in that a flow obstruction portion 15 is installed. In the case of the second comparative example, an area of a region not covered by the flow obstruction portion 15, in a total area of the first plate 11a, that is, the area of the open region, was set to be approximately 40%, and a shape of the open region was set to be the same as that of the first comparative example.

In the case of the gas injection nozzle 100a applied to the first inventive example of FIG. 7C, the inlet opening 115 included one slit-shaped hole, the communication hole 135 included two slit-shaped holes, and the injection hole 125 included a plurality of perforated holes. Each width of the slits of the inlet opening 115 and the communication hole 135 was 4 mm, and a total cross-sectional area of the inlet opening 115 was approximately 6,000 mm². Diameters of each injection hole 125 were 10 mm, and a total cross-sectional area of the plurality of injection holes 125 was 53,780 mm² (square millimeter).

The gas injection nozzle 100b applied to the second inventive example of FIG. 7D includes two inlet openings 115a disposed on both sides of the first sidewall 112, and a gap between each of the inlet openings 115a was 2 mm, and the total cross-sectional area of the inlet openings 115 was approximately 6,000 mm². The communication hole 135 included two slit-shaped holes, and the width of the slit of the communication hole 135 was 4 mm. Diameters of each injection hole 125 was 10 mm, and the total cross-sectional area of the plurality of injection holes 125 was 53,780 mm2 (square millimeter).

In the case of the first and second comparative examples illustrated in FIGS. 7A and 7B, when viewed as a whole, the flow velocity of the second part CT disposed in a central portion of the electrode plate in the width direction was low, while the flow velocity of the first part DS and the third part OS disposed at both sides of the electrode plate in the width direction tended to be high. That is, in the case of the first and second comparative examples, a large velocity deviation occurred between the widthwise side parts DS and OS and the widthwise central portion CT of the electrode plate.

In the case the first and second inventive examples illustrated in FIGS. 7C and 7D, when viewed as a whole, as compared to the first and second comparative examples, the flow velocity of the second part CT disposed in the central portion of the electrode plate in the width direction was increased, and the flow velocity of the first part DS and the third part OS disposed on both sides of the electrode plate in the width direction were on a similar level.

That is, in the case of the first and second inventive examples, it may be seen that the velocity deviation between the widthwise side parts DS and OS and the widthwise central portion CT of the electrode plate was reduced compared to the first and second comparative examples.

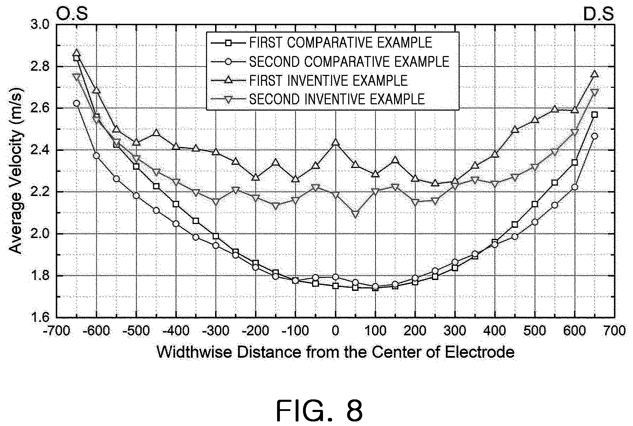

FIG. 8 is a graph obtained by comparing differences in average velocity according to a width directional position of the electrode plate for Inventive Examples and Comparative Examples of the present disclosure.

FIG. 8 is a graph quantifying average flow velocity of an electrode plate in the width direction at an upper side 5 mm away from the surface of the electrode plate to compare deviations in flow rate of the first and second comparative examples illustrated in FIGS. 7A and 7B with the first and second inventive examples illustrated in FIGS. 7C and 7D.

As may be seen in FIG. 8, in the case of the first and second inventive examples, the flow velocity of the central portion in the width direction increased compared to the first and second comparative examples, and the flow velocity of both side parts DS and OS of the electrode plate in the width direction was almost the same.

Table 1 below shows the average flow rate and deviation for the first comparative example, the second comparative example, the first inventive example, and the second inventive example. Table 1 illustrates results of quantifying the average flow velocity of the electrode plate in the width direction at the upper side 5 mm away from the surface of the electrode plate.

As may be seen in Table 1, it was confirmed that in the case of the first and second inventive examples, the deviation in the flow velocity of the electrode plate in the width direction was greatly reduced compared to the first and second comparative examples, and the deviation in the flow rate was also reduced accordingly.

**Table 1:**

| DIVISION | | FIRST COMPARATIVE EXAMPLE | SECOND COMPARATIVE EXAMPLE | FIRST INVENTIVE EXAMPLE | SECOND INVENTIVE EXAMPLE |
|---|---|---|---|---|---|
| UPPER PORTION 5 MM AWAY FROM SURFACE OF ELECTRODE PLATE | AVERAGE VELOCITY (m/s) | 2.05 | 1.98 | 2.43 | 2.29 |
| | STANDARD DEVIATION (m/s) | 1.00 | 0.75 | 0.81 | 0.74 |
| | STANDARD DEVIATION / AVERAGE | 0.49 | 0.38 | 0.33 | 0.32 |
| | MAXIMUM VELOCITY (m/s) | 4.77 | 4.82 | 5.41 | 4.70 |
| OS AVERAGE VELOCITY (m/s) | | 2.70 | 2.50 | 2.77 | 2.65 |
| CT AVERAGE VELOCITY (m/s) | | 2.30 | 2.13 | 2.53 | 2.36 |
| DS AVERAGE VELOCITY (m/s) | | 2.45 | 2.35 | 2.67 | 2.58 |
| OS-CT DEVIATION RATE (%) | | 0.40 | 0.37 | 0.24 | 0.29 |
| OS-DS DEVIATION RATE (%) | | 0.25 | 0.15 | 0.10 | 0.07 |

As described above, according to one embodiment of the present disclosure, the drying gas may be injected onto the electrode plate with little deviation in the flow rate and/or flow velocity in the width direction of the electrode plate. Accordingly, even for wide electrode plates, the occurrence of defects such as cracks and bending on both side parts of the electrode plate may be reduced, and even for wide electrode plates, the quality of electrode plates may be improved.

The content described above is merely an example of applying the principles of the present disclosure. Additionally, the above-described embodiments may be implemented by deleting some components, and each embodiment may be implemented in combination with each other.

## Claims

1. A gas injection nozzle (100) for drying an electrode plate, coupled to a chamber of a drying apparatus (200) for the electrode plate, including the chamber (210, 230) for supplying a drying gas for drying the electrode plate, the gas injection nozzle (100) comprising:
a first nozzle body (110) including at least one inlet opening (115, 115a) configured to allow the drying gas to flow therein;
a second nozzle body (120) connected to the first nozzle body (110) and including a plurality of injection holes (125) configured to inject the drying gas outside of the gas injection nozzle (100); and
a partition plate (130) disposed between the first nozzle body (110) and the second nozzle body (120), and including at least one communication hole (135) configured to allow the drying gas to flow from the at least one inlet opening (115, 115a) to the plurality of injection holes (125),
wherein at least a portion of the first nozzle body (110) has a shape protruding into a gas supply space of the chamber so as to be disposed inside the chamber (210, 230).

2. The gas injection nozzle (100) for drying an electrode plate of claim 1, wherein the second nozzle body (120) is disposed outside of the chamber, and/or
wherein the first nozzle body (110) includes a first plate (111) in which the at least one inlet opening (115, 115a) is formed, and a first sidewall (112) extending from both ends of the first plate (111).

3. The gas injection nozzle (100) for drying an electrode plate of claim 1 or 2, wherein the at least one inlet opening (115, 115a) has a slit shape crossing the first plate (111) in a longitudinal direction of the first nozzle body; and/or
wherein the at least one communication hole (135) has a slit shape crossing the partition plate (130) in a longitudinal direction of the partition plate (130); and/or
wherein the injection holes (125) of the plurality of injection holes (125) have a circular shape.

4. The gas injection nozzle (100) for drying an electrode plate of any one of the preceding claims, wherein the first plate (111) and the partition plate (130) are spaced apart from each other in a first direction, and
the at least one communication hole (135) is disposed not to face the at least one inlet opening (115) along the first direction; and/or
wherein a number of the at least one communication hole (135) is greater than a number of the at least one inlet opening (115).

5. The gas injection nozzle (100) for drying an electrode plate of any one of the preceding claims,
wherein a total cross-sectional area of the at least one communication hole (135) has a value greater than a value of a total cross-sectional area of the at least one inlet opening (115, 115a); and/or
wherein a total cross-sectional area of a plurality of injection holes (125) has a value larger than a value of the total cross-sectional area of the at least one communication hole (135).

6. The gas injection nozzle (100) for drying an electrode plate of any one of the preceding claims,
wherein the partition plate (130) divides a flow space (140) formed between the first nozzle body (110) and the second nozzle body (120) into a first flow space (141) opposing the first nozzle body (110) and a second flow space (142) opposing the second nozzle body (120); and/or
wherein the second nozzle body (120) includes a coupling portion (123) coupled to the chamber through a fastening member (150), and the first nozzle body (110) has a shape protruding from the coupling portion (123) toward the gas supply space of the chamber.

7. The gas injection nozzle (100) for drying an electrode plate of any one of claims 1 to 6, wherein the second nozzle body (120) includes a second plate (121) in which the plurality of injection holes (125) are formed, and a second sidewall (122) extending from both ends of the second plate (121), and
the first nozzle body (110) includes a first sidewall (112) connected to the second sidewall (122) and a cap plate (113) covering the first sidewall (112).

8. The gas injection nozzle (100) for drying an electrode plate of claim 7, wherein the cap plate (113) includes a first part (113a) spaced apart from an upper end of the first sidewall (112), and a second part (113b) extending from both ends of the first part (113a), and
the at least one inlet opening (115a) is formed between an outer surface of the first sidewall (112) and the second part (113b); and /or wherein the cap plate (113) includes a cross-section having an upside-down U-Shape.

9. The gas injection nozzle (100) for drying an electrode plate of claim 8, wherein a second gap (T2) between the upper end of the first sidewall (112) and the first part (113a) has a value of 0.7 to 1.3 times a first gap (T1) between the outer surface of the first sidewall (112) and the second part (113b), and/or
wherein a height of the second part (113b) has a value of 10% or more, or 90% or less of a height of the first sidewall (112).

10. A drying apparatus (200) for an electrode plate, comprising:
a chamber (210, 230) having a gas supply space through which drying gas for drying the electrode plate flows; and
a plurality of gas injection nozzles (100) according to any one of claims 1 to 9, coupled to the chamber (210, 230) to communicate with the gas supply space of the chamber.

11. The drying apparatus (200) for an electrode plate of claim 10, wherein the second nozzle body (120) includes a coupling portion (123) coupled to the chamber through a fastening member (150), and
the first nozzle body (110) has a shape protruding from the coupling portion (123) toward the gas supply space of the chamber.

12. The drying apparatus (200) for an electrode plate of claim 10 or 11, wherein the chamber includes an inlet port (211, 231) for supplying the drying gas from outside of the chamber to the gas supply space, and
the inlet port (211, 231) is configured to supply the drying gas in a longitudinal direction of the gas injection nozzle (100).

13. The drying apparatus (200) for an electrode plate of any one of claims 10 to 12, wherein the chamber includes a first chamber (210) through which the drying gas injected onto a first surface of the electrode plate flows, and a second chamber (230) through which the drying gas injected onto a second surface of the electrode plate flows, and
a plurality of gas injection nozzles (100) are installed in at least one of the first chamber (210) or the second chamber (230).

14. A system for drying an electrode, in particular for drying a cathode and/or an anode of a battery, the system comprising said electrode and the gas injection nozzle (100) according to any one of claims 1 to 9, or the drying apparatus (200) according to any one of claims 10 to 13.

15. A method for preparing a dried electrode plate, in particular for preparing a dried cathode and/or a dried anode of a battery, the method comprising:
providing an electrode plate (ES) to be dried,
using the gas injection nozzle (100) according to any one of claims 1 to 9, or the drying apparatus (200) according to any one of claims 10 to 13 to let drying gas flow for drying the electrode plate (ES).
